# EUROPÄISCHE PATENTSCHRIFT

(11) **EP 3 992 881 B1**
(45) Veröffentlichungstag und Bekanntmachung des Hinweises auf die Patenterteilung: **20.08.2025**
(21) Anmeldenummer: 21202726.2
(22) Anmeldetag: 14.10.2021
(51) Int. Cl.: G06Q 10/08

(54) **VORRICHTUNG ZUR INSTALLATION AN EINEM KOMMISSIONIER- UND/ODER VERPACKUNGSARBEITSPLATZ UND COMPUTERGESTÜTZTES VERFAHREN ZUM ÜBERWACHEN UND FÜHREN EINES MITARBEITERS**
DEVICE FOR INSTALLATION ON A PICKING AND / OR PACKAGING WORKSTATION AND COMPUTER-AIDED METHOD FOR MONITORING AND GUIDING AN OPERATOR
DISPOSITIF DESTINÉ À ÊTRE INSTALLÉ SUR UN POSTE DE TRAVAIL DE PRÉPARATION DE COMMANDES ET/OU D'EMBALLAGE ET PROCÉDÉ ASSISTÉ PAR ORDINATEUR DE SUIVI ET DE GUIDAGE D'UN COLLABORATEUR

(30) Priorität: 22.10.2020 DE 102020127881
(43) Veröffentlichungstag der Anmeldung: 04.05.2022
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl & Partner mbB

(56) Entgegenhaltungen:
- US-A1- 2013 293 539
- US-A1- 2019 355 144

## Beschreibung

Die Erfindung betrifft eine Vorrichtung zur Installation an einem Kommissionier- oder Verpackungsarbeitsplatz und ein computergestütztes Verfahren zum Unterstützen eines Kommissionier- und/oder Packvorgangs.

Beim Kommissionieren von Waren werden gemischte Packstücke von einem Mitarbeiter auf einen Ladungsträger, z.B. eine Palette, in einen Karton, eine Box oder einen Container gepackt. Als Packstücke sollen in diesem Zusammenhang auch unverpackte Waren, z.B. ein unverpackter Ball, oder auch nicht quaderförmig verpackte Waren bezeichnet, werden. Auch kann es sein, dass vorkommissionierte Packstücke an einem separaten Verpackungsplatz auf einen Ladungsträger verpackt werden. Dabei werden die Positionen der einzelnen Packstücke abhängig von verschiedenen Kriterien optimiert, insbesondere so optimiert, dass das verfügbare Volumen optimal ausgenutzt wird. Ein weiteres Kriterium ist die Stabilität des Stapels, der so konfiguriert werden sollte, dass vor dem Anbringen oder nach dem Öffnen einer Umverpackung z.B. aus einer mit Stretch-Folie umwickelten Palette keine einzelnen Packstücke herunterfallen. Damit zusammen hängt auch die Massenverteilung im Packstapel. Stabilere und schwerere Packstücke sollten nicht auf leichteren und/oder zerbrechlichen Packstücken liegen. Auch kann eine bestimmte Orientierung zwingend erforderlich sein, falls der Artikel bspw. auslaufen kann und aus diesem Grund stehend gelagert werden muss.

Während diese Optimierung heute in der Regel auf der Erfahrung der Mitarbeiter beruht, wurde bereits vorgeschlagen, dass die Optimierung der Packmuster auch computergestützt erfolgen kann. Aus der US 2010249989 A1 und der US 8,965,559 B2 sind beispielsweise computergestützte Verfahren zum Optimieren eines Packmusters bekannt. Die Ergebnisse einer solchen computergestützten Optimierung werden nach dem Stand der Technik insbesondere in Anwendungen benötigt, in denen der eigentliche Packvorgang von einem Roboter durchgeführt wird.

Ein weiteres Beispiel für ein solches robotergestütztes Verfahren ist in der US 2019/0016543 A1 beschrieben. Dort ist der Roboter zudem mit einer 3D-Kamera ausgestattet, die Abweichungen des tatsächlichen Packmusters vom theoretischen Packmuster erfasst und den Ablagevorgang für das nächste Packstück entsprechend anpasst. Solche Abweichungen können auftreten, wenn die hinterlegten Werte fehlerhaft sind oder wenn Packstücke verkippen, verrutschen oder im Stapel elastisch deformiert werden.

Ferner ist es bekannt, an Kommissionier-Arbeitsplätzen 3D-Kameras vorzusehen, die Eingriffe des Mitarbeiters in Quell- und/oder Zielbehälter überwachen. Ein Bildschirm mit einem Arbeitsplatzdialog zeigt Anweisungen für den jeweils nächsten Schritt an und gibt ggf. Fehlermeldungen aus, wenn der Mitarbeiter einen Artikel vergessen hat oder in einen falschen Behälter gegriffen hat. Das Packmuster im Zielbehälter wird in solchen Fällen nicht überwacht und/oder optimiert.

Systeme, in denen Mitarbeiter durch einen Arbeitsplatzdialog angeleitet werden, computergenerierte Packmuster nachzubauen, konnten sich bisher in der Praxis nichtdurchsetzen. Häufig hat der Mitarbeiter für das Ablegen des jeweils nächsten Packstücks mehrere äquivalente Möglichkeiten. Entscheidet er sich in einem Fall für eine andere als diejenige, die der Computer vorgeschlagen hatte, ist die gesamte Rest-Sequenz der vom Computer vorbereiteten Packschritte wertlos. Die Erfahrung zeigt, dass deshalb in der Praxis die Anweisungen des computergenerierten Arbeitsplatz-Dialogs bereits nach wenigen Arbeitsschritten nicht mehr zur tatsächlichen Situation auf dem Ladungsträger passen und der Mitarbeiter in der Praxis die weiteren Anweisungen ignoriert.

Aus der US 2019 / 0 355 144 A1 ist eine Vorrichtung benannt, die einen Bildsensor zum Erfassen eines Ist-Packmusters benannt, die über einen Arbeitsplatzdialog eine optimierte Platzierung des nächsten Packstücks vorschlägt.

Der Erfindung liegt die Aufgabe zu Grunde, einen verbesserten Arbeitsplatz und ein verbessertes Verfahren bereitzustellen, in denen sowohl die Leistungsfähigkeit einer computergestützten Optimierung von Packmustern als auch die praktische Erfahrung des Mitarbeiters genutzt werden können und eine fruchtbare Mensch-Maschine-Kollaboration ermöglicht wird.

Die Aufgabe wird gelöst durch eine Vorrichtung zur Installation an einem Kommissionier- und/oder Verpackungsarbeitsplatz mit den Merkmalen des Anspruchs 1 und durch ein computergestütztes Verfahren mit den Merkmalen des Anspruchs 10.

Die Erfindung geht aus von einer Vorrichtung zur Installation an einem Kommissionier- und/oder Verpackungsarbeitsplatz zum Packen eines Packauftrags von mehreren, insbesondere ungleichen Packstücken auf einen Ladungsträger. Der Arbeitsplatz umfasst einen Stellplatz für den Ladungsträger, einen Arbeitsplatz für einen Mitarbeiter, einen Computer mit einer Software zum Berechnen eines optimierten Packmusters und einer entsprechenden Packsequenz von Arbeitsschritten und ein Display zum Anzeigen eines Arbeitsplatzdialogs. Erfindungsgemäß ist der Computer dazu ausgelegt, auf dem Display Anweisungen für einen nächsten Arbeitsschritt der Packsequenz zum Ablegen des jeweils nächsten Packstücks entsprechend dem optimierten Packmuster anzuzeigen.

Ein Packauftrag im Sinne dieser Beschreibung kann ein Packvorgang im Rahmen eines Kommissionierauftrags, ein Auftrag zum Packen von Produkten in einem Produktionsprozess oder Wareneingangsprozess oder ein sonstiger Pack- oder Umpackvorgang sein.

Ein Display im Sinne dieser Erfindung kann auch eine Augmented-Reality (AR)-Brille, eine Projektionsvorrichtung oder andere Art der visuellen Informationsübertragungsvorrichtung sein, die dem Mitarbeiter Packanweisungen geben kann.

Der Packauftrag kann ein Teil einer Bestellung eines Kunden sein, die auf mehrere Ladungsträger kommissioniert und gepackt wird oder die komplette Bestellung umfassen, so dass nur ein Ladungsträger benötigt wird. Im erstgenannten Fall wird die gesamte Bestellung auf mehrere Packaufträge bzw. Ladungsträger aufgeteilt. Die Erfindung ist insbesondere für das Packen bzw. Beladen von Paletten sinnvoll einsetzbar, kann aber auch für das

Beladen von Versandkartons, Containern oder anderen Ladungsträgern eingesetzt werden.

Die Vorrichtung umfasst ferner wenigstens einen 3D-Sensor, insbesondere eine 3D-Kamera, der über dem Stellplatz für den Ladungsträger angeordnet ist. Die Position und Orientierung der Kamera ist vorzugsweise so gewählt, dass sämtliche der auf dem Ladungsträger angeordneten Packstücke gut sichtbar sind - auch wenn der Ladungsträger voll beladen ist. Dazu ist der 3D-Sensor vorzugsweise 1,2 m oder mehr über einer maximalen Beladungshöhe des Ladungsträgers angeordnet. Um das dreidimensionale Erfassen des Packstück-Stapels weiter zu verbessern, kann die Vorrichtung auch mit mehreren 3D-Sensoren ausgestattet sein. Es ist auch möglich, dass mehrere 2D-Sensoren vorgesehen sind, die zusammen eine dreidimensionale Aufnahme ermöglichen, d.h. gemeinsam einen 3D-Sensor, insbesondere eine 3D-Kamera, bilden.

Erfindungsgemäß ist der Computer dazu ausgelegt, die Daten des 3D-Sensors zu erfassen und daraus ein Ist-Packmuster auf dem Ladungsträger zu ermitteln. Dazu wird beispielsweise der Raum in ein Raster von Voxeln aufgeteilt und mit statistischen Mitteln kann ein Durchschnittshöhe ermittelt werden. Alternativ oder ergänzend dazu können in den Daten Kanten der Packstücke im dreidimensionalen Raum detektiert und ggf. durch Extrapolation begradigt werden. Da jeweils nur ein neues Packstück aufgestapelt wird, können zum genaueren Bestimmen des Ist-Packmusters auch die aus vorhergehenden Arbeitsschritten bekannten Daten zur Position, Orientierung und den Abmessungen bereits zuvor aufgelegter Packstücke genutzt werden, z.B. um die Position von in den aktuellen Daten verdeckten Packstücken und/oder Kanten zu ermitteln. Es ist auch möglich, dass mehrere Packstücke des gleichen zu kommissionierenden Artikels unmittelbar hintereinander aufgelegt werden. Auch hier erkennt das System automatisch jedes aufgestapelte Packstück und zeigt dem Mitarbeiter automatisch die nächste Stapelposition an.

Ferner ist der Computer dazu ausgelegt, das Ist-Packmuster mit einem Soll-Packmuster zu vergleichen, das nach planmäßiger Ausführung des letzten Arbeitsschritts zu erwarten war. Sowohl vom Ist-Packmuster als auch vom Soll-Packmuster wird ein dreidimensionales Modell erzeugt, wodurch die Packmuster vergleichbar sind.

Bei Abweichungen zwischen Ist-Packmuster und Soll-Packmuster führt der Computer in Echtzeit eine neue Optimierung des Packmusters durch, wobei das Ist-Packmuster als Randbedingung verwendet wird und das Packen der verbleibenden Packstücke in einem verbleibenden Rest-Volumen optimiert wird, um ein neues optimiertes Packmuster und eine entsprechende Rest-Packsequenz für die verbleibenden Packstücke zu erhalten. Die neue Optimierung wird in einem vorteilhaften Ausführungsbeispiel der Erfindung nur dann ausgeführt, wenn die Abweichung größer als ein Schwellenwert ist, insbesondere größer als eine Messgenauigkeit.

Schließlich ist der Computer dazu ausgelegt, auf dem Display Anweisungen für einen nächsten Arbeitsschritt der Rest-Packsequenz zum Ablegen des jeweils nächsten Packstücks entsprechend dem neu optimierten Packmuster anzuzeigen.

Die Packsequenz wird daher dynamisch in Echtzeit an die Ist-Situation angepasst. Entscheidet sich der Mitarbeiter, nicht den Empfehlungen des Arbeitsplatzdialogs zu folgen, wird ihm automatisch eine aktualisierte und angepasste Packsequenz präsentiert, die seine Entscheidung berücksichtigt. Auf diese Weise kann eine verbesserte Vorrichtung sowohl die Leistungsfähigkeit einer computergestützten Optimierung von Packmustern als auch die praktische Erfahrung des Mitarbeiters nutzen und es wird eine fruchtbare Mensch-Maschine-Kollaboration ermöglicht. Derartige Abweichungen des Mitarbeiters von den Empfehlungen des Arbeitsplatzdialogs können in besonders vorteilhaften Ausgestaltungen der Erfindung genutzt werden, um die Packsequenzen zukünftiger Aufträge weiter zu verbessern, z.B. durch maschinelles Lernen.

In diesem Zusammenhang bedeutet der Begriff "in Echtzeit", dass die neue Optimierung und dynamische Anpassung innerhalb von Sekundenbruchteilen und höchstens 1 - 3 Sekunden erfolgt, jedenfalls in einem Zeitraum, der kürzer ist als der Zeitraum, den der Mitarbeiter für die Aufnahme des nächsten Packstücks benötigt, so dass für den Mitarbeiter keine störenden Wartezeiten entstehen.

Ferner wird vorgeschlagen, dass der Mitarbeiter nach dem Feststellen einer Abweichung zwischen Ist-Packmuster und Soll-Packmuster aufgefordert wird, die Abweichung zu bestätigen. Die zusätzliche Bestätigung ist in einer besonders vorteilhaften Ausführungsform optional, d.h. es ist konfigurierbar, ob die Abweichung generell automatisch übernommen wird oder zu bestätigen ist. Nur nach erfolgter Bestätigung wird ein neu optimiertes Packmuster berechnet und ansonsten wird der Mitarbeiter über den Arbeitsplatzdialog aufgefordert, das Packstück gemäß dem ursprünglichen Packmuster neu abzulegen oder ohne Änderung fortzufahren. Dadurch können versehentliche Abweichungen von bewussten Entscheidungen des Mitarbeiters getrennt werden und das System kann aus den Entscheidungen des Mitarbeiters lernen.

In einer besonders vorteilhaften Ausgestaltung der Erfindung umfasst die Vorrichtung eine Datenbank mit Produkt-Stammdaten, in der Abmessungen der Packstücke gespeichert sind, wobei der Computer zum Berechnen des optimierten Packmusters die Abmessungen der Packstücke aus den Produkt-Stammdaten nutzt. Dadurch kann die Optimierung auf Daten zurückgreifen, die in der Regel sehr verlässlich sind.

Ferner wird vorgeschlagen, dass der Computer dazu ausgelegt ist, nach dem Feststellen einer Abweichung zwischen Ist-Packmuster und Soll-Packmuster zu entscheiden, ob die Abweichung durch fehlerhafte Abmessungen des Packstücks in den Stammdaten bedingt ist, und, falls dies der Fall ist, die Abmessungen in den Stammdaten zu korrigieren. Der Computer kann auf diese Weise fehlerhafte Stammdaten erkennen und automatisch korrigieren, so dass ein selbstlernendes System ermöglicht wird.

In einer weiteren Ausgestaltung der Erfindung wird vorgeschlagen, dass der Computer dazu ausgelegt ist, nach dem Feststellen einer Abweichung zwischen Ist-Packmuster und Soll-Packmuster zu entscheiden, ob die Abweichung durch eine im Vergleich zu dem optimierten Packmuster geänderte Orientierung des Packstücks bedingt ist und, falls dies der Fall ist, die Orientierung in den Stammdaten als bevorzugte oder verpflichtende Orientierung zu hinterlegen. Dadurch kann das System bevorzugte oder verpflichtende Orientierungen lernen und bei zukünftigen Optimierungsvorgängen nutzen, insbesondere bei Packtücken, die nur in einer Orientierung bzw. aufrecht gepackt werden dürfen.

In einer vorteilhaften Ausgestaltung der Erfindung ist der Computer dazu ausgelegt, vor der Korrektur der Stammdaten im Hinblick auf die Orientierung und/oder die Abmessungen über den Arbeitsplatzdialog eine Bestätigung des Mitarbeiters zu verlangen. Auch hier ist die zusätzliche Bestätigung in einer besonders vorteilhaften Ausführungsform optional, d.h. es ist konfigurierbar, ob die Korrektur der Stammdaten generell automatisch übernommen wird oder zu bestätigen ist.

Ferner wird vorgeschlagen, dass die Datenbank dazu ausgelegt ist, Kombinationsabmessungen von Kombinationen aus zwei oder mehr Packstücken zu speichern, wobei das den Kombinationsabmessungen entsprechende Volumen geringer ist als die Summe der Volumina der einzelnen Packstücke. Bei nicht-quaderförmigen Packstücken sind häufig in den Stammdaten nur die Länge, die Höhe und die Breite als Abmessungen gespeichert. Manche Packstücke, beispielsweise Eimer, Wannen oder Stühle, können aber ineinander geschachtelt, gestapelt oder anderweitig raumsparend kombiniert werden. Derartige raumsparende Kombinationen können dann bei der Optimierung berücksichtigt werden. Mehrere gleichartige, leere Eimer oder Wannen können beispielsweise ineinander gestapelt werden, so dass die Kombination mehrerer Eimer oder Wannen Abmessungen bzw. ein Volumen hat, das sich von der Summe der Abmessungen bzw. Volumina der einzelnen Eimer bzw. Wannen unterscheidet. Ferner können auch verschiedenartige Packstücke kombiniert werden. Beispielsweise kann ein kleines Packstück in einen Hohlraum eines größeren Packstücks gesteckt werden, z.B. ein Ball in einen leeren Eimer oder leeren Behälter gelegt werden. Dadurch kann das Packvolumen effizient genutzt werden und die Statik des Stapels verbessert werden.

Dabei kann die Datenbank insbesondere dazu ausgelegt sein, zu den Kombinationsabmessungen jeweils Kombinations-Arbeitsanweisungen zu speichern, die Verschachteln, Ineinanderstecken oder platzsparendes Kombinieren der Packstücke betreffen und die Kombinations-Arbeitsanweisungen im Arbeitsplatzdialog anzuzeigen, wenn das optimierte Packmuster eine Kombination erfordert. Dadurch lernt das System. Das Lernen kann statt über Stammdaten auch über ein Künstliche-Intelligenz (KI)-Netz erfolgen. Vorteil an dem KI-Netz ist hierbei, dass eine größere Zahl an Parametern für die Optimierung eingesetzt werden kann. Im oben genannten Beispiel könnte der Arbeitsplatzdialog z.B. die Anweisung "Eimer ineinander stapeln" oder "Ball in Eimer legen" anzeigen, wenn der Packauftrag mehrere Eimer bzw. einen Ball und einen Eimer umfasst und diese im nächsten Arbeitsschritt verpackt werden müssen.

Ferner wird vorgeschlagen, dass der Computer dazu ausgelegt ist, beim Erkennen einer Abweichung zwischen Ist-Packmuster und Soll-Packmuster ein verfügbares Restvolumen auf dem Ladungsträger zu ermitteln. Abhängig von dem verfügbaren Restvolumen des Packauftrags kann der Computer ein weiteres Packstück hinzuzufügen oder ein Packstück entfernen und die neue Optimierung des Packmusters bezüglich des so geänderten Packauftrags durchführen. Damit ist auch die Anzahl und Auswahl der Artikel in dem Packauftrag nicht fest vorgegeben, sondern kann als Variable der Optimierung verändert werden. Im günstigsten Fall können so Ladungsträger eingespart werden, was sich positiv auf die Versandkosten auswirkt.

Ein weiterer Aspekt der Erfindung betrifft ein computergestütztes Verfahren zum Überwachen und Führen eines Mitarbeiters beim Packen eines Packauftrags von mehreren, insbesondere ungleichen Packstücken auf einen Ladungsträger, umfassend die Schritte Berechnen eines optimierten Packmusters und einer entsprechenden Packsequenz von Arbeitsschritten durch einen Computer, und Anzeigen von Anweisungen für einen nächsten Arbeitsschritt der Packsequenz zum Ablegen des jeweils nächsten Packstücks entsprechend dem optimierten Packmuster durch den Computer auf einem Display eines Arbeitsplatzdialogs. Es wird vorgeschlagen, dass das Verfahren ferner die folgenden Schritte umfasst:
- Erfassen der Daten eines 3D-Sensors, die auf den Stellplatz für den Ladungsträger gerichtet ist, insbesondere über dem Stellplatz für den Ladungsträger angeordnet ist, durch den Computer
- Ermitteln eines Ist-Packmusters auf dem Ladungsträger aus den Daten des 3D-Sensors;
- Vergleichen des Ist-Packmusters mit einem Soll-Packmuster, das nach planmäßiger Ausführung des letzten Arbeitsschritts zu erwarten war;
- Durchführen einer neuen Optimierung des Packmusters bei Abweichungen zwischen Ist-Packmuster und Soll-Packmuster durch den Computer, wobei das Ist-Packmuster als Randbedingung verwendet wird und das Packen der verbleibenden Packstücke in einem verbleibenden Rest-Volumen optimiert wird, um ein neues optimiertes Packmuster und eine entsprechende Rest-Packsequenz für die verbleibenden Packstücke zu erhalten; und
- Anzeigen von Anweisungen für einen nächsten Arbeitsschritt der Rest-Packsequenz zum Ablegen des jeweils nächsten Packstücks entsprechend dem neu optimierten Packmuster auf dem Display.

Weitere Merkmale ergeben sich aus der folgenden Beschreibung von Ausführungsbeispielen der Erfindung und den angehängten Figuren. Der Fachmann wird die Merkmale aus dieser Beschreibung, den angehängten Patentansprüchen und den Figuren auch einzeln betrachten und zu weiteren Kombinationen und Unterkombinationen zusammenfassen um die Erfindung, wie sie in den Patentansprüchen definiert ist, an seine Bedürfnisse anzupassen.

Dabei zeigen:
- Fig. 1: Vorrichtung zur Installation an einem Kommissionier- und/oder Verpackungsarbeitsplatzmit einem Stellplatz für einen Ladungsträger und einem Display für einen Arbeitsplatzdialog nach einem ersten Ausführungsbeispiel der Erfindung;
- Fig. 2: ein schematisches Ablaufdiagramm eines Ausführungsbeispiels der Erfindung; und
- Fig. 3: eine detailliertere Darstellung der Abweichungs-Prozedur aus Fig. 2.

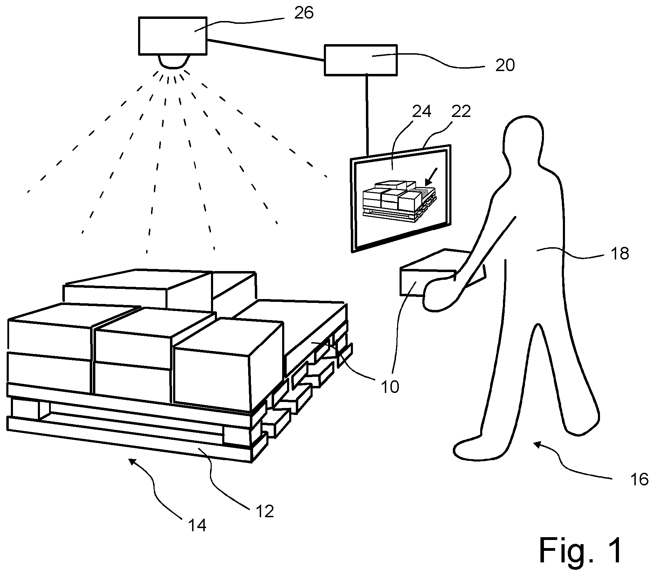

Figur 1 zeigt Vorrichtung zur Installation an einem Kommissionier- und/oder Verpackungsarbeitsplatz zum Packen eines Packauftrags von mehreren, insbesondere ungleichen Packstücken 10 auf einen Ladungsträger 12, und zwar auf eine Palette.

Die Packstücke 10 werden über eine Fördertechnik oder manuell zum Beispiel entsprechend einer Bestellung am Arbeitsplatz bereitgestellt. Bei Bestellungen, die nicht auf eine Palette passen, wird die Bestellung in mehrere Kommissionieraufträge aufgeteilt.

Die Vorrichtung umfasst einen Stellplatz 14 für den Ladungsträger 12, einen Arbeitsplatz 16 für einen Mitarbeiter 18, einen Computer 20 mit einer Software zum Berechnen eines optimierten Packmusters und einer entsprechenden Packsequenz von Arbeitsschritten und ein Display 22 zum Anzeigen eines Arbeitsplatzdialogs.

Der Computer 20 ist durch eine geeignete Software dazu ausgelegt, auf dem Display 22 Anweisungen für einen nächsten Arbeitsschritt der Packsequenz zum Ablegen des jeweils nächsten Packstücks 10 entsprechend dem optimierten Packmuster anzuzeigen. Der Computer 20 selbst muss selbstverständlich nicht unmittelbar am Arbeitsplatz 16 stehen, sondern kann ein Server oder ein zentraler Rechner eines Logistiksystems sein oder ein Verteiltes System, in dem einige Arbeitsschritte von einem Arbeitsplatzrechner und andere Arbeitsschritte von einem zentralen Rechner ausgeführt werden.

Die Vorrichtung umfasst ferner wenigstens einen in diesem Beispiel als 3D-Kamera 26 ausgebildeten 3D-Sensor, die über dem Stellplatz 14 für den Ladungsträger 12 hängt, und zwar ca. 2,50 - 3 m über dem Boden oder 1 - 2 m über einer maximalen Packhöhe des Ladungsträgers 12. Der Stellplatz 14 kann eine Fördertechnik sein. Ferner können Ladungsträger 12 in verschiedenen Größen und Formen, beispielswiese Zielpaletten, Zielbehälter oder Zielkartons in verschiedenen Größen sein.

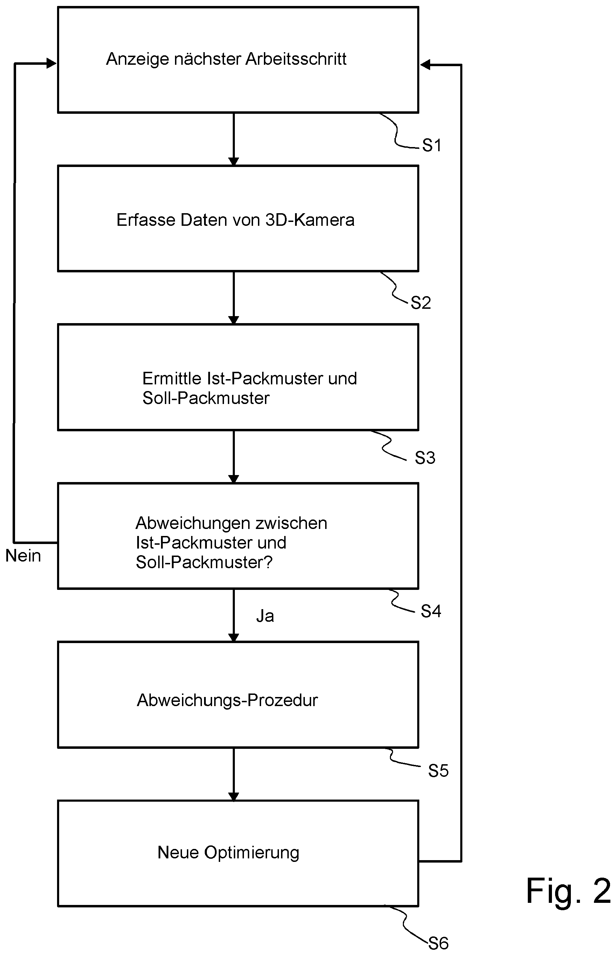

Der reguläre Betriebsablauf am Arbeitsplatz 16 ist in Fig. 2 dargestellt. In einem Schritt S1 zeigt der Computer 20 auf dem Arbeitsplatzdialog 16 die Anweisungen für den nächsten Arbeitsschritt an, d.h. die Anordnung des nächsten abzulegenden Packstücks 10 und seine Orientierung werden graphisch dargestellt, beispielswese durch ein 3D-Gitternetz oder eine Augmented-Reality Darstellung mit einer Darstellung es Packstücks 10, die eine Echtzeit-Videoaufnahme oder ein Foto des aktuellen Stapels überlagert. Im letzten Fall kann der Arbeitsplatzdialog 16 bzw. das Display 22 auch eine Augmented-Reality-Brille o.ä. umfassen.

In einem Schritt S2 erfasst der Computer 20 die Daten der 3D-Kamera 26 und ermittelt daraus in einem Schritt S3 ein Ist-Packmuster auf dem Ladungsträger 12 und ein theoretisches Soll-Packmuster. Zum Ermitteln des Ist-Packmusters extrahiert der Computer 20 Kanten aus den Bilddaten der 3D-Kamera 26 und erstellt ein aus den Kanten aufgebautes Gittermodell des Packmusters oder nutzt andere Konzepte. Da beim Beladen des Ladungsträgers 12 die Packstücke 10 nach und nach aufgestapelt werden, können Kanten, die im aktuellen Bild verdeckt sind, aus den Bilddaten vorhergehender Arbeitsschritte ermittelt werden.

Neben dem Ist-Packmuster ermittelt der Computer 20 im Schritt S3 ein Soll-Packmuster. Das Soll-Packmuster ist ebenfalls ein Gittermodell und ist dasjenige Packmuster, das nach planmäßiger Ausführung des letzten Arbeitsschritts zu erwarten war, d.h. dasjenige Packmuster, das durch Hinzufügen des nächsten Packstücks 10 gemäß der optimierten Packsequenz entstehen würde, wenn man annimmt, dass der Mitarbeiter 18 das Packstück 10 genau an der im Arbeitsplatzdialog 24 vorgegebenen Stelle in der im Arbeitsplatzdialog 24 vorgegebenen Orientierung ablegt und dass die in später näher erläuterten Stammdaten hinterlegten Abmessungen genau stimmen.

In einem Schritt S4 ermittelt der Computer 20 Abweichungen zwischen Ist-Packmuster und Soll-Packmuster. Die Abweichungen treten insbesondere bei der Position, Orientierung und Größe des zuletzt aufgelegten Packstücks 10 auf, wenn der Mitarbeiter 18 das Packstück 10 anders abgelegt hat als dies im Arbeitsplatzdialog 24 gemäß der optimierten Packsequenz vorgeschlagen worden war.

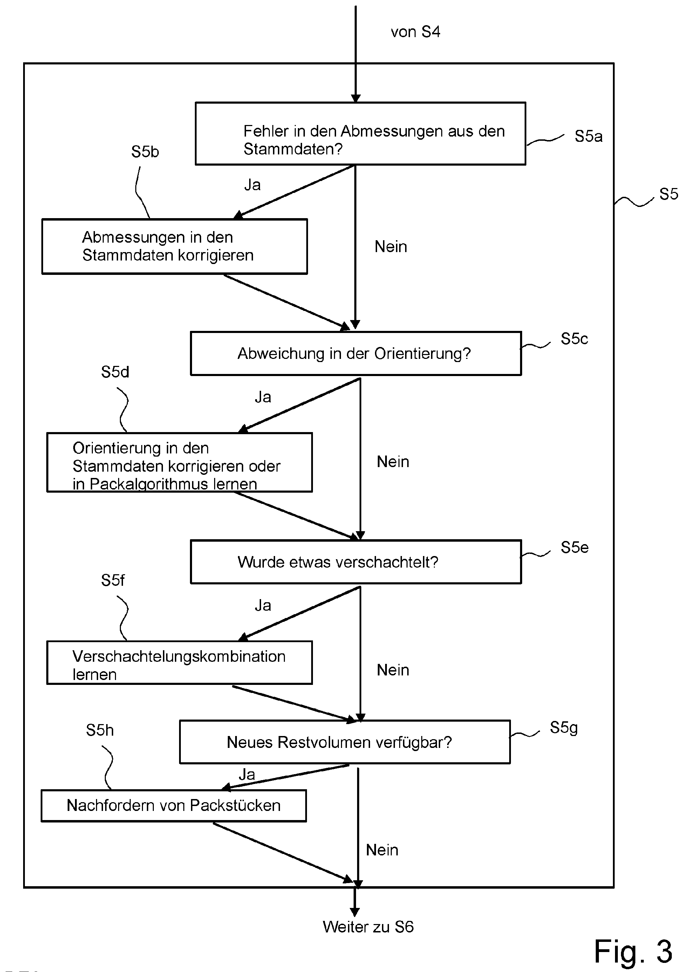

Sind die Abweichungen größer als ein Schwellenwert, bzw. sind eines oder mehrere Kriterien erfüllt, die geringfügige Abweichungen herausfiltern (Ja in Schritt S4), führt der Computer 20 in einem Schritt S5 eine Abweichungs-Prozedur aus, die in Fig. 3 detaillierter dargestellt ist.

Sind die Abweichungen kleiner als der Schwellenwert bzw. sind die Kriterien nicht erfüllt (Nein in S4), fährt der Computer 20 mit der Anzeige des nächsten Arbeitsschritts gemäß der ursprünglichen Packsequenz fort und wiederholt das Verfahren mit Schritt S1, sofern die Packsequenz nicht beendet ist.

In einer Variante der Erfindung ist optional ein zusätzlicher Bestätigungsschritt einstellbar bzw. abwählbar. Bei eingestelltem Bestätigungsschritt wird der Mitarbeiter 18 nach dem Feststellen einer Abweichung zwischen Ist-Packmuster und Soll-Packmuster aufgefordert, die Abweichung auf dem Arbeitsplatzdialog 24 zu bestätigen (nicht dargestellt). Nur nach erfolgter Bestätigung wird ein neu optimiertes Packmuster berechnet und ansonsten wird der Mitarbeiter 18 über den Arbeitsplatzdialog 24 aufgefordert, das Packstück 10 gemäß dem ursprünglichen Packmuster neu abzulegen oder den Packvorgang einfach fortzufahren.

Zur Berechnung der optimierten Packmuster bzw. Teil-Packmuster nutzt der Computer 20 eine Datenbank mit Produkt-Stammdaten, in der Abmessungen der Packstücke 10 gespeichert sind, wobei der Computer 20 zum Berechnen des optimierten Packmusters die Abmessungen der Packstücke 10 aus den Produkt-Stammdaten nutzt. Die Abmessungen umfassen eine Länge, eine Höhe und eine Breite des Packstücks 10 sowie Angaben zu einer bevorzugten und/oder verpflichtenden Orientierung.

Die Abweichungs-Prozedur aus Schritt S5 in Fig. 2 ist detaillierter in Fig. 3 dargestellt. Nach dem Feststellen einer Abweichung zwischen Ist-Packmuster und Soll-Packmuster entscheidet der Computer 20 in einem Schritt S5a, ob die Abweichung durch fehlerhafte Abmessungen des Packstücks 10 in den Stammdaten bedingt ist und, falls dies der Fall ist, korrigiert der Computer 20 in einem Schritt S5b die Abmessungen in den Stammdaten.

In einem Schritt S5c entscheidet der Computer 20, ob die Abweichung durch eine im Vergleich zu dem optimierten Packmuster geänderte Orientierung des Packstücks 10 bedingt ist und, falls dies der Fall ist, hinterlegt der Computer 20 in einem Schritt S5d die Orientierung in den Stammdaten oder in einer Datenbank des Packalgorithmus oder eines KI-Netzes als bevorzugte oder verpflichtende Orientierung.

In Varianten der Erfindung kann der Computer 20 vor der Korrektur der Stammdaten über den Arbeitsplatzdialog 24 eine Bestätigung des Mitarbeiters 18 verlangen und/oder die Korrekturen in den Schritten S5b und/oder S5d nur dann ausführen, wenn die Abweichungen mit einer gewissen Häufigkeit festgestellt wurden.

In einem Schritt S5e prüft der Computer 20, ob Packstücke verschachtelt wurden und lernt ggf. die neue Verschachtelungskombination (S5f).

In einem Schritt S5g prüft der Computer, ob durch die geänderte Ablage neues Restvolumen verfügbar ist. Falls dies der Fall ist, werden ggf. in einem Schritt S5h neue Packstücke angefordert.

Wieder Bezug nehmend auf Fig. 2 führt der Computer 20 in einem Schritt S6 eine neue Optimierung des Packmusters durch, wobei das Ist-Packmuster als Randbedingung verwendet wird und das Packen der verbleibenden Packstücke 10 des Packauftrags in einem verbleibenden Rest-Volumen optimiert wird, um ein neues optimiertes Packmuster und eine entsprechende Rest-Packsequenz für die verbleibenden Packstücke 10 zu erhalten.

Nach dem Durchführen der neuen Optimierung in Schritt S6 wiederholt der Computer 20 das Verfahren ab dem Schritt S1 mit der Maßgabe, dass dann auf dem Display 22 Anweisungen für einen nächsten Arbeitsschritt angezeigt werden, und zwar den nächsten Arbeitsschritt der Rest-Packsequenz zum Ablegen des jeweils nächsten Packstücks 10 entsprechend dem neu optimierten Packmuster falls in Schritt S4 relevante Abweichungen festgestellt worden waren, und den nächsten Arbeitsschritt der unveränderten Packsequenz, wenn keine Abweichungen festgestellt worden waren.

Die Optimierung des Packmusters betrifft in erster Linie die Raumausnutzung, berücksichtigt aber auch mit geeigneten Gewichtungen die Stabilität bzw. Statik des Stapels und die Massenverteilung.

Bezug nehmend auf die Schritte S5e und S5f in Fig. 3 werden zur Optimierung nicht nur verschiedene Anordnungen der als quaderförmig mit Länge, Breite und Höhe aus den Stammdaten genäherten Packstücke 10 genutzt, sondern die Optimierung berücksichtigt auch besonders günstige Kombinationen von Packstücken 10 aus dem Packauftrag. Dazu speichert die Datenbank Kombinationsabmessungen von Kombinationen aus zwei oder mehr Packstücken 10, wobei das den Kombinationsabmessungen entsprechende Volumen geringer ist als die Summe der Volumina der einzelnen Packstücke 10. Beispielsweise kann bei Eimern, die ineinander gestapelt werden können, in der Datenbank hinterlegt werden, dass eine Kombination von zwei ineinander gestapelten Eimern bei gleichbleibender Breite und Tiefe die 1,1-fache Höhe hat, eine Kombination einer Zahl N von Eimern die 1 + 0,1*N-fache Höhe. Wenn ein kleines Packstück 10 wie beispielsweise ein Ball in einen Eimer oder anderen leeren Behälter gelegt werden kann, entspricht die Kombinationsabmessung von Ball und Eimer der Abmessung des Eimers. Der Computer 20 sucht in der Datenbank mögliche Kombinationen aus Packstücken 10 des Packauftrags und variiert beim Optimieren neben den verschiedenen Anordnungen auch die möglichen Kombinationen zur Ermittlung des optimalen Packmusters. In einer vorteilhaften Ausprägung wird dies über KI-Netze abgebildet, insbesondere wenn mehr als 2 unförmige Artikel ineinander gestapelt werden. In diesem Fall kann das KI-Netz die Kombinationen immer weiter lernen und neue Kombinationen automatisch lernen und für künftige Verplanungen einsetzen.

Ergänzend zu den Kombinationsabmessungen speichert die Datenbank jeweils Kombinations-Arbeitsanweisungen, die Verschachteln, Ineinanderstecken oder platzsparendes Kombinieren der Packstücke 10 betreffen und die Kombinations-Arbeitsanweisungen werden im Arbeitsplatzdialog 24 angezeigt, wenn das optimierte Packmuster eine Kombination erfordert. Der Mitarbeiter 18 wird über den Arbeitsplatzdialog 24 also angewiesen, z.B. ein Packstück 10 A mit Packstück 10 B auf eine bestimmte Weise zu kombinieren.

Eine weitere Variable, die bei der Optimierung variiert wird, ist die Anzahl und die Art der Packstücke 10 in des Packauftrags. Insbesondere berechnet der Computer 20 beim Erkennen einer Abweichung zwischen Ist-Packmuster und Soll-Packmuster ein verfügbares Restvolumen auf dem Ladungsträger 12 (Schritt S5g in Fig. 3) und fügt testweise im Rahmen der für die Optimierung durchgeführten Simulation abhängig von dem verfügbaren Restvolumen des Packauftrags ein weiteres Packstück 10 hinzu oder entfernt ein Packstück 10. Die neue Optimierung des Packmusters wird dann bezüglich des so geänderten Packauftrags durchgeführt. Falls es auch mit dem weiteren Packstück 10 eine Lösung für das Optimierungsproblem gibt, wird das neue Packstück 10 endgültig zum Packauftrag ergänzt und angefordert (Schritt S5h).

In den oben beschriebenen Ausführungsbeispielen erkennt der Computer 20 mit Hilfe der 3D-Kamera 26, ob der Ziel-Ladungsträger 12 schief auf dem Stellplatz 14 steht und gleicht diese Schiefstellung automatisch aus.

## Patentansprüche

1. Vorrichtung zur Installation an einem Kommissionier- oder Verpackungsarbeitsplatz zum Packen eines Packauftrags von mehreren, insbesondere ungleichen Packstücken (10) auf einen Ladungsträger (12), umfassend:
- einen Stellplatz (14) für den Ladungsträger (12);
- einen Arbeitsplatz (16) für einen Mitarbeiter (18);
- einen Computer (20) mit einer Software zum Berechnen eines optimierten Packmusters und einer entsprechenden Packsequenz von Arbeitsschritten; und
- ein Display (22) zum Anzeigen eines Arbeitsplatzdialogs (24),
wobei der Computer (20) dazu ausgelegt ist, auf dem Display (22) Anweisungen für einen nächsten Arbeitsschritt der Packsequenz zum Ablegen des jeweils nächsten Packstücks (10) entsprechend dem optimierten Packmuster anzuzeigen,
ferner umfassend
wenigstens einen 3D-Sensor (26), der auf den Stellplatz (14) für den Ladungsträger (12) gerichtet ist, wobei der Computer (20) dazu ausgelegt ist:
- die Daten des 3D-Sensors (26) zu erfassen und daraus ein Ist-Packmuster auf dem Ladungsträger (12) zu ermitteln;
- das Ist-Packmuster mit einem Soll-Packmuster zu vergleichen, das nach planmäßiger Ausführung des letzten Arbeitsschritts zu erwarten war;
- bei Abweichungen zwischen Ist-Packmuster und Soll-Packmuster in Echtzeit eine neue Optimierung des Packmusters durchzuführen, wobei das Ist-Packmuster als Randbedingung verwendet wird und das Packen der verbleibenden Packstücke (10) in einem verbleibenden Rest-Volumen optimiert wird, um ein neues optimiertes Packmuster und eine entsprechende Rest-Packsequenz für die verbleibenden Packstücke (10) zu erhalten; und
- auf dem Display (22) Anweisungen für einen nächsten Arbeitsschritt der Rest-Packsequenz zum Ablegen des jeweils nächsten Packstücks (10) entsprechend dem neu optimierten Packmuster anzuzeigen,
**dadurch gekennzeichnet, dass** der Computer (20) dazu ausgelegt ist (20), nach dem Feststellen einer Abweichung zwischen Ist-Packmuster und Soll-Packmuster den Mitarbeiter (18) über den Arbeitsplatzdialog (24) aufzufordern, die Abweichung zu bestätigen, nur nach erfolgter Bestätigung ein neu optimiertes Packmuster zu berechnen, und ansonsten der Mitarbeiter (18) über den Arbeitsplatzdialog (24) aufzufordern, das Packstück (10) gemäß dem ursprünglichen Packmuster neu anzulegen.

2. Vorrichtung nach Anspruch 1,
**gekennzeichnet durch** eine Datenbank mit Produkt-Stammdaten, in der Abmessungen der Packstücke (10) gespeichert sind, wobei der Computer (20) zum Berechnen des optimierten Packmusters die Abmessungen der Packstücke (10) aus den Produkt-Stammdaten nutzt.

3. Vorrichtung nach Anspruch 2,
**dadurch gekennzeichnet, dass** der Computer (20) dazu ausgelegt ist, nach dem Feststellen einer Abweichung zwischen Ist-Packmuster und Soll-Packmuster zu entscheiden, ob die Abweichung durch fehlerhafte Abmessungen des Packstücks (10) in den Stammdaten bedingt ist und, falls dies der Fall ist, die Abmessungen in den Stammdaten zu korrigieren.

4. Vorrichtung nach einem der Ansprüche 2 oder 3,
**dadurch gekennzeichnet, dass** der Computer (20) dazu ausgelegt ist, nach dem Feststellen einer Abweichung zwischen Ist-Packmuster und Soll-Packmuster zu entscheiden, ob die Abweichung durch eine im Vergleich zu dem optimierten Packmuster geänderte Orientierung des Packstücks (10) bedingt ist und, falls dies der Fall ist, die Orientierung in den Stammdaten als bevorzugte oder verpflichtende Orientierung zu hinterlegen.

5. Vorrichtung nach Anspruch 4, **dadurch gekennzeichnet, dass** die in den Stammdaten als bevorzugte oder verpflichtende Orientierung abhängig von einer Statik des Stapelaufbaus oder von sonstigen vorher oder nachher zu verpackenden Packstücken (10) ist und der Computer (20) ein KI-Netz zum Lernen der bevorzugten oder verpflichtenden Orientierung nutzt.

6. Vorrichtung nach Anspruch 3, 4 oder 5,
**dadurch gekennzeichnet, dass** der Computer (20) dazu ausgelegt ist, vor der Korrektur der Stammdaten über den Arbeitsplatzdialog (24) eine Bestätigung des Mitarbeiters (18) zu verlangen.

7. Vorrichtung nach einem der Ansprüche 2 bis 6,
**dadurch gekennzeichnet, dass** die Datenbank ferner dazu ausgelegt ist, Kombinationsabmessungen von Kombinationen aus zwei oder mehr Packstücken (10) zu speichern, wobei das den Kombinationsabmessungen entsprechende Volumen geringer ist als die Summe der Volumina der einzelnen Packstücke (10).

8. Vorrichtung nach Anspruch 7,
**dadurch gekennzeichnet, dass** die Datenbank dazu ausgelegt ist, zu den Kombinationsabmessungen jeweils Kombinations-Arbeitsanweisungen zu speichern, die Verschachteln, Ineinanderstecken oder platzsparendes Kombinieren der Packstücke (10) betreffen und die Kombinations-Arbeitsanweisungen im Arbeitsplatzdialog (24) anzuzeigen, wenn das optimierte Packmuster eine Kombination erfordert.

9. Vorrichtung nach einem der vorhergehenden Ansprüche, **dadurch gekennzeichnet, dass** der Computer (20) dazu ausgelegt ist, beim Erkennen einer Abweichung zwischen Ist-Packmuster und Soll-Packmuster ein verfügbares Restvolumen auf dem Ladungsträger (12) zu ermitteln, abhängig von dem verfügbaren Restvolumen des Packauftrags ein weiteres Packstück (10) hinzuzufügen oder ein Packstück (10) zu entfernen und die neue Optimierung des Packmusters bezüglich des so geänderten Packauftrags durchzuführen.

10. Computergestütztes Verfahren zum Überwachen und Führen eines Mitarbeiters (18) beim Packen eines Packauftrags von mehreren, insbesondere ungleichen Packstücken (10) auf einen Ladungsträger (12), umfassend die Schritte:
- Berechnen eines optimierten Packmusters und einer entsprechenden Packsequenz von Arbeitsschritten durch einen Computer (20); und
- Anzeigen von Anweisungen für einen nächsten Arbeitsschritt der Packsequenz zum Ablegen des jeweils nächsten Packstücks (10) entsprechend dem optimierten Packmuster durch den Computer (20) auf einem Display (22) eines Arbeitsplatzdialogs (24),
wobei
das Verfahren ferner die folgenden Schritte umfasst:
- Erfassen der Daten eines 3D-Sensors (26), der auf den Stellplatz (14) für den Ladungsträger (12) gerichtet ist, durch den Computer (20);
- Ermitteln eines Ist-Packmusters auf dem Ladungsträger (12) aus den Daten des 3D-Sensors (26);
- Vergleichen des Ist-Packmusters mit einem Soll-Packmuster, das nach planmäßiger Ausführung des letzten Arbeitsschritts zu erwarten war;
- Durchführen einer neuen Optimierung des Packmusters in Echtzeit bei Abweichungen zwischen Ist-Packmuster und Soll-Packmuster durch den Computer (20), wobei das Ist-Packmuster als Randbedingung verwendet wird und das Packen der verbleibenden Packstücke (10) in einem verbleibenden Rest-Volumen optimiert wird, um ein neues optimiertes Packmuster und eine entsprechende Rest-Packsequenz für die verbleibenden Packstücke (10) zu erhalten;
- Anzeigen von Anweisungen für einen nächsten Arbeitsschritt der Rest-Packsequenz zum Ablegen des jeweils nächsten Packstücks (10) entsprechend dem neu optimierten Packmuster auf dem Display (22); und
- Auffordern des Mitarbeiters (18) nach dem Feststellen einer Abweichung zwischen Ist-Packmuster und Soll-Packmuster, die Abweichung zu bestätigen, wobei nur nach erfolgter Bestätigung ein neu optimiertes Packmuster berechnet wird und ansonsten der Mitarbeiter (18) über den Arbeitsplatzdialog (24) aufgefordert wird, das Packstück (10) gemäß dem ursprünglichen Packmuster neu anzulegen.

## Claims

1. A device for installation at a picking and/or packaging workstation for packing a packing order of several, in particular unequal packages (10) onto a load carrier (12), comprising:
- a placement area (14) for the load carrier (12);
- a workstation (16) for an operator (18);
- a computer (20) with software for calculating an optimized packing pattern and a corresponding packing sequence of work steps; and
- a display (22) for displaying a workplace dialog (24),
wherein the computer (20) is designed to display instructions for a next work step of the packing sequence for placing the respective next package (10) according to the optimized packing pattern on the display (22),
further comprising at least one 3D sensor (26) that is directed at the placement area (14) for the load carrier (12),
wherein the computer (20) is designed to:
- capture the data of the 3D sensor (26) and determine an actual packing pattern on the load carrier (12) from it;
- compare the actual packing pattern with a target packing pattern that was to be expected after scheduled execution of the last work step;
- perform a new optimization of the packing pattern in real time when there are deviations between the actual packing pattern and the target packing pattern, whereby the actual packing pattern is used as a boundary condition and the packing of the remaining packages (10) in a remaining residual volume is optimized to obtain a new optimized packing pattern and a corresponding remaining packing sequence for the remaining packages (10); and
- display instructions for a next work step of the remaining packing sequence for placing the respective next package (10) according to the newly optimized packing pattern on the display (22),
**characterized in that** the computer (20) is designed to prompt the operator (18) via the workplace dialog (24) to confirm the deviation after detecting a deviation between the actual packing pattern and the target packing pattern, to calculate a newly optimized packing pattern only after confirmation has been given, and otherwise to prompt the operator (18) via the workplace dialog (24) to reposition the package (10) according to the original packing pattern.

2. A device according to claim 1, **characterized by** a database with product master data in which dimensions of the packages (10) are stored, wherein the computer (20) uses the dimensions of the packages (10) from the product master data to calculate the optimized packing pattern.

3. A device according to claim 2, **characterized in that** the computer (20) is designed to decide, after detecting a deviation between the actual packing pattern and the target packing pattern, whether the deviation is caused by incorrect dimensions of the package (10) in the master data and, if this is the case, to correct the dimensions in the master data.

4. A device according to one of claims 2 or 3, **characterized in that** the computer (20) is designed to decide, after detecting a deviation between the actual packing pattern and the target packing pattern, whether the deviation is caused by a changed orientation of the package (10) compared to the optimized packing pattern and, if this is the case, to store the orientation in the master data as a preferred or mandatory orientation.

5. A device according to claim 4, **characterized in that** the orientation stored in the master data as preferred or mandatory orientation depends on a statics of the stack structure or on other packages (10) to be packed before or after, and the computer (20) uses an AI network to learn the preferred or mandatory orientation.

6. A device according to claim 3, 4 or 5, **characterized in that** the computer (20) is designed to request confirmation from the operator (18) via the workplace dialog (24) before correcting the master data.

7. A device according to one of claims 2 to 6, **characterized in that** the database is further designed to store combination dimensions of combinations of two or more packages (10), wherein the volume corresponding to the combination dimensions is less than the sum of the volumes of the individual packages (10).

8. A device according to claim 7, **characterized in that** the database is designed to store combination work instructions for each of the combination dimensions, which concern nesting, inserting or space-saving combining of the packages (10), and to display the combination work instructions in the workplace dialog (24) when the optimized packing pattern requires a combination.

9. A device according to one of the preceding claims, **characterized in that** the computer (20) is designed to determine an available residual volume on the load carrier (12) when detecting a deviation between the actual packing pattern and the target packing pattern, to add another package (10) or remove a package (10) depending on the available residual volume of the packing order, and to perform the new optimization of the packing pattern with respect to the thus modified packing order.

10. A computer-aided method for monitoring and guiding an operator (18) when packing a packing order of several, in particular unequal packages (10) onto a load carrier (12), comprising the steps:
- calculating an optimized packing pattern and a corresponding packing sequence of work steps by a computer (20); and
- displaying instructions for a next work step of the packing sequence for placing the respective next package (10) according to the optimized packing pattern by the computer (20) on a display (22) of a workplace dialog (24),
wherein the method further comprises the following steps:
- capturing the data of a 3D sensor (26) that is directed at the placement area (14) for the load carrier (12) by the computer (20);
- determining an actual packing pattern on the load carrier (12) from the data of the 3D sensor (26);
- comparing the actual packing pattern with a target packing pattern that was to be expected after scheduled execution of the last work step;
- performing a new optimization of the packing pattern in real time when there are deviations between the actual packing pattern and the target packing pattern by the computer (20), whereby the actual packing pattern is used as a boundary condition and the packing of the remaining packages (10) in a remaining residual volume is optimized to obtain a new optimized packing pattern and a corresponding remaining packing sequence for the remaining packages (10);
- displaying instructions for a next work step of the remaining packing sequence for placing the respective next package (10) according to the newly optimized packing pattern on the display (22); and
- prompting the operator (18) after detecting a deviation between the actual packing pattern and the target packing pattern to confirm the deviation, wherein a newly optimized packing pattern is calculated only after confirmation has been given and otherwise the operator (18) is prompted via the workplace dialog (24) to reposition the package (10) according to the original packing pattern.

## Revendications

1. Dispositif destiné à être installé sur un poste de travail de préparation de commandes et/ou d'emballage pour emballer une commande d'emballage de plusieurs colis (10), notamment inégaux, sur un support de charge (12), comprenant :
- un emplacement (14) pour le support de charge (12) ;
- un poste de travail (16) pour un opérateur (18) ;
- un ordinateur (20) avec un logiciel pour calculer un modèle d'emballage optimisé et une séquence d'emballage correspondante d'étapes de travail ; et
- un écran (22) pour afficher un dialogue de poste de travail (24),
dans lequel l'ordinateur (20) est conçu pour afficher sur l'écran (22) des instructions pour une prochaine étape de travail de la séquence d'emballage pour placer le prochain colis respectif (10) selon le modèle d'emballage optimisé, comprenant en outre au moins un capteur 3D (26) qui est dirigé vers l'emplacement (14) pour le support de charge (12),
dans lequel l'ordinateur (20) est conçu pour :
- capturer les données du capteur 3D (26) et en déterminer un modèle d'emballage réel sur le support de charge (12) ;
- comparer le modèle d'emballage réel avec un modèle d'emballage cible qui était attendu après l'exécution planifiée de la dernière étape de travail ;
- effectuer en temps réel une nouvelle optimisation du modèle d'emballage en cas d'écarts entre le modèle d'emballage réel et le modèle d'emballage cible, le modèle d'emballage réel étant utilisé comme condition limite et l'emballage des colis restants (10) dans un volume résiduel restant étant optimisé pour obtenir un nouveau modèle d'emballage optimisé et une séquence d'emballage restante correspondante pour les colis restants (10) ; et
- afficher sur l'écran (22) des instructions pour une prochaine étape de travail de la séquence d'emballage restante pour placer le prochain colis respectif (10) selon le modèle d'emballage nouvellement optimisé,
- **caractérisé en ce que** l'ordinateur (20) est conçu pour inviter l'opérateur (18) via le dialogue de poste de travail (24) à confirmer l'écart après avoir détecté un écart entre le modèle d'emballage réel et le modèle d'emballage cible, pour calculer un modèle d'emballage nouvellement optimisé uniquement après confirmation, et sinon pour inviter l'opérateur (18) via le dialogue de poste de travail (24) à repositionner le colis (10) selon le modèle d'emballage original.

2. Dispositif selon la revendication 1, **caractérisé par** une base de données avec des données de base de produits dans laquelle sont stockées les dimensions des colis (10), l'ordinateur (20) utilisant les dimensions des colis (10) à partir des données de base de produits pour calculer le modèle d'emballage optimisé.

3. Dispositif selon la revendication 2, **caractérisé en ce que** l'ordinateur (20) est conçu pour décider, après avoir détecté un écart entre le modèle d'emballage réel et le modèle d'emballage cible, si l'écart est causé par des dimensions incorrectes du colis (10) dans les données de base et, si c'est le cas, pour corriger les dimensions dans les données de base.

4. Dispositif selon l'une des revendications 2 ou 3, **caractérisé en ce que** l'ordinateur (20) est conçu pour décider, après avoir détecté un écart entre le modèle d'emballage réel et le modèle d'emballage cible, si l'écart est causé par une orientation modifiée du colis (10) par rapport au modèle d'emballage optimisé et, si c'est le cas, pour stocker l'orientation dans les données de base comme orientation préférée ou obligatoire.

5. Dispositif selon la revendication 4, **caractérisé en ce que** l'orientation stockée dans les données de base comme orientation préférée ou obligatoire dépend d'une statique de la structure de la pile ou d'autres colis (10) à emballer avant ou après, et l'ordinateur (20) utilise un réseau d'IA pour apprendre l'orientation préférée ou obligatoire.

6. Dispositif selon la revendication 3, 4 ou 5, **caractérisé en ce que** l'ordinateur (20) est conçu pour demander une confirmation de l'opérateur (18) via le dialogue de poste de travail (24) avant de corriger les données de base.

7. Dispositif selon l'une des revendications 2 à 6, **caractérisé en ce que** la base de données est en outre conçue pour stocker des dimensions de combinaison de combinaisons de deux ou plusieurs colis (10), le volume correspondant aux dimensions de combinaison étant inférieur à la somme des volumes des colis individuels (10).

8. Dispositif selon la revendication 7, **caractérisé en ce que** la base de données est conçue pour stocker des instructions de travail de combinaison pour chacune des dimensions de combinaison, qui concernent l'emboîtement, l'insertion ou la combinaison économe en espace des colis (10), et pour afficher les instructions de travail de combinaison dans le dialogue de poste de travail (24) lorsque le modèle d'emballage optimisé nécessite une combinaison.

9. Dispositif selon l'une des revendications précédentes, **caractérisé en ce que** l'ordinateur (20) est conçu pour déterminer un volume résiduel disponible sur le support de charge (12) lors de la détection d'un écart entre le modèle d'emballage réel et le modèle d'emballage cible, pour ajouter un autre colis (10) ou retirer un colis (10) en fonction du volume résiduel disponible de la commande d'emballage, et pour effectuer la nouvelle optimisation du modèle d'emballage par rapport à la commande d'emballage ainsi modifiée.

10. Procédé assisté par ordinateur pour surveiller et guider un opérateur (18) lors de l'emballage d'une commande d'emballage de plusieurs colis (10), notamment inégaux, sur un support de charge (12), comprenant les étapes suivantes :
- calcul d'un modèle d'emballage optimisé et d'une séquence d'emballage correspondante d'étapes de travail par un ordinateur (20) ; et
- affichage d'instructions pour une prochaine étape de travail de la séquence d'emballage pour placer le prochain colis respectif (10) selon le modèle d'emballage optimisé par l'ordinateur (20) sur un écran (22) d'un dialogue de poste de travail (24),
le procédé comprenant en outre les étapes suivantes :
- capture des données d'un capteur 3D (26) qui est dirigé vers l'emplacement (14) pour le support de charge (12) par l'ordinateur (20) ;
- détermination d'un modèle d'emballage réel sur le support de charge (12) à partir des données du capteur 3D (26) ;
- comparaison du modèle d'emballage réel avec un modèle d'emballage cible qui était attendu après l'exécution planifiée de la dernière étape de travail ;
- réalisation d'une nouvelle optimisation du modèle d'emballage en temps réel en cas d'écarts entre le modèle d'emballage réel et le modèle d'emballage cible par l'ordinateur (20), le modèle d'emballage réel étant utilisé comme condition limite et l'emballage des colis restants (10) dans un volume résiduel restant étant optimisé pour obtenir un nouveau modèle d'emballage optimisé et une séquence d'emballage restante correspondante pour les colis restants (10) ;
- affichage d'instructions pour une prochaine étape de travail de la séquence d'emballage restante pour placer le prochain colis respectif (10) selon le modèle d'emballage nouvellement optimisé sur l'écran (22) ; et
- invitation de l'opérateur (18) après avoir détecté un écart entre le modèle d'emballage réel et le modèle d'emballage cible à confirmer l'écart, un modèle d'emballage nouvellement optimisé n'étant calculé qu'après confirmation et sinon l'opérateur (18) étant invité via le dialogue de poste de travail (24) à repositionner le colis (10) selon le modèle d'emballage original.
